# EUROPÄISCHE PATENTSCHRIFT

(11) **EP 2 470 807 B1**
(45) Veröffentlichungstag und Bekanntmachung des Hinweises auf die Patenterteilung: **27.11.2013**
(21) Anmeldenummer: 10754253.2
(22) Anmeldetag: 02.08.2010
(51) Int. Cl.: F16D 1/104, F16D 1/10

(54) **VERSPANNSYSTEM UND VERFAHREN ZUM VERSPANNEN EINER WELLE-NABE-VERBINDUNG**
CLAMPING SYSTEM AND METHOD FOR CLAMPING A SHAFT-HUB CONNECTION
SYSTÈME DE SERRAGE, ET PROCÉDÉ DE SERRAGE D'UNE LIAISON ARBRE-MOYEU

(30) Priorität: 24.08.2009 DE 102009038640
(43) Veröffentlichungstag der Anmeldung: 04.07.2012
(73) Patentinhaber: Schaeffler Technologies AG & Co. KG, 91074 Herzogenaurach (DE)
(72) Erfinder: VOGEL, Florian, 76534 Baden-Baden (DE); ÜBELACKER, Marc, 76189 Karlsruhe (DE); SPETH, Peter, 77815 Bühl (DE)
(86) Internationale Anmeldenummer: PCT/DE2010/000910
(87) Internationale Veröffentlichungsnummer: WO 2011/023158

(56) Entgegenhaltungen:
- WO-A1-2007/022745
- WO-A2-2007/000140
- FR-A1- 2 883 054
- GB-A- 1 545 416

## Beschreibung

Die Erfindung betrifft ein Verspannsystem für eine Welle-Nabe-Verbindung. Ferner betrifft die Erfindung ein Verfahren zum Verspannen einer Welle-Nabe-Verbindung.

Ein derartiges Verspannsystem ist beispielsweise aus der WO 2007/000140 in Form eines Kupplungssystems bekannt. Dieses Verspannsystem weist ein eine Außenverzahnung aufweisendes Wellenelement in Form eines Zahnkranzes einer Kupplung und ein eine Innenver zahnung aufweisendes Nabenelement in Form eines Flansches eines Dämpfers auf. Um eine einwandfreie Drehübertragung zwischen dem Wellenelement und dem Nabenelement mit möglichst reduzierten Anschlags- bzw. Klappergeräuschen aufgrund von Torsionsschwingungen zu erreichen, ist es hierbei vorgeschlagen, dass das Wellenelement mehrere Aussparungen aufweist, in welche jeweils ein Federelement angeordnet wird, welches Federarme aufweist, die in die Innenverzahnung des Nabenelements eingreifen und dadurch ein Verspannen des Wellenelements mit dem Nabenelement realisieren. Nachteilig bei diesem Verspannsystem ist jedoch der hohe konstruktive Aufwand, indem zunächst Aussparungen in das Wellenelement eingebracht werden müssen, wodurch hohe Kosten aufgrund der notwendigen Bearbeitung des Wellenelements entstehen.

Aus der GB 1 545 416 ist ein Verspannsystem und ein Verfahren zum Verspannen einer Welle-Nabe-Verbindung gemäß dem Oberbegriff der Ansprüche 1 und 7 bekannt.

Aufgabe der Erfindung ist es daher, ein Verspannsystem für eine Welle-Nabe-Verbindung sowie ein Verfahren zum Verspannen einer Welle-Nabe-Verbindung zur Verfügung zu stellen, welches sich durch einen verringerten Konstruktionsaufwand und damit durch verringerte Herstellungskosten auszeichnet.

Die Lösung der Aufgabe erfolgt erfindungsgemäß durch die Merkmale des Anspruchs 1. Vorteilhafte Ausgestaltungen sind in den Unteransprüchen angegeben.

Der Zahnring ist dabei vorzugsweise derart an dem Verspannsystem vorgesehen, dass der Zahnring eine axiale Bewegung entlang seiner Rotationsachse ausführen kann, wobei durch die axiale Bewegung der Zahnring sich relativ zu dem Wellenelement bzw. zu dem Nabenelement verdrehen kann, wodurch eine Montage des Wellenelements an dem Nabenelement realisiert werden kann. Die axiale Bewegung des Zahnringes und die daraus resultierende Verdrehbewegung des Zahnringes wird durch den Versatz zwischen der Verzahnung des Zahnringes und der Innenverzahnung des Nabenelements und/oder der Außenverzahnung des Wellenelements realisiert, wobei der Versatz vorzugsweise sowohl vor dem verspannten Zustand als auch im verspannten Zustand der Welle-Nabe-Verbindung vorgesehen ist, wobei sich der Winkel des Versatzes von dem vor dem verspannten Zustand zu dem verspannten Zustand hin ändert. Dadurch, dass bereits von Anfang an ein Versatz zwischen der Verzahnung des Zahnringes und der Innenverzahnung des Nabenelements bzw. der Außenverzahnung des Wellenelements vorgesehen ist, wird der Zahnring bei der Montage des Wellenelements an dem Nabenelement bzw. bei der Montage des Nabenelements an dem Wellenelement axial entlang seiner Rotationsachse bewegt und verdreht sich daraufhin im Wesentlichen tangential zu seiner Rotationsachse. Beispielsweise ist der Versatz zwischen der Verzahnung des Zahnringes und der Innenverzahnung des Nabenelements dabei derart gestaltet, dass die Breite eines Zahns der Außenverzahnung des Wellenelements größer ist als der Spalt zwischen einem Zahn der Verzahnung des Zahnringes und einem Zahn der Innenverzahnung des Nabenelements.

Die Montage der Welle-Nabe-Verbindung kann dabei vorzugsweise derart ausgeführt werden, dass die Zähne der Außenverzahnung des Wellenelements eine Einfädelfase aufweisen, mittels welcher die Zähne des Wellenelements in den jeweiligen Spalt zwischen den Zähnen der Innenverzahnung des Nabenelements und den Zähnen der Verzahnung des Zahnringes geschoben werden können, wobei der Zahnring dabei zunächst axial bewegt wird und dadurch entlang seiner Rotationsachse verdreht wird, so dass sich der Spalt zwischen eines Zahns der Verzahnung des Zahnringes und eines Zahns der Innenverzahnung des Nabenelements bis zu einer ausreichenden Größe vergrößert, so dass ein Zahn des Wellenelements in dem Spalt zwischen einem Zahn des Zahnringes und einem Zahn des Nabenelements, insbesondere durch eine Verklemmung, in dem Spalt fixiert werden kann, wodurch eine Verspannung realisiert wird. Mittels der Verspannung kann der Zahnring die Außenverzahnung des Wellenelements mit der Innenverzahnung des Nabenelements verklemmen. Die Verzahnungen des Wellenelements, des Nabenelements und des Zahnringes können dadurch in einer Relativverdrehrichtung zueinander verspannt werden. Durch die winkelmäßige Positionierung der Verzahnungen des Wellenelements, des Nabenelements und des Zahnringes können diese relativ zueinander in einer Lage gehalten werden, die gewährleistet, dass in beide Relativdrehrichtungen ein, wenn auch geringes, Verdrehspiel zwischen den Verzahnungen vorhanden ist. Durch die dadurch realisierte Vorspannung und das dabei realisierte Verspannen kann ein Verschleiß der Verzahnungen des Wellenelementes und des Nabenelements reduziert werden. Ferner ist bei dem erfindungsgemäßen Verspannsystem insbesondere vorteilhaft, dass zur Realisierung des Verspannens das Wellenelement und das Nabenelement nicht zusätzlich baulich verändert werden müssen, sondern lediglich ein Zahnring zusätzlich vorgesehen ist, so dass der Konstruktionsaufwand für eine derartige Welle-Nabe-Verbindung erheblich reduziert werden kann und dadurch die Herstellungskosten reduziert werden können.

Nach einer vorteilhaften Ausgestaltung der Erfindung ist der Zahnring elastisch ausgebildet. Dadurch, dass der Zahnring elastisch ausgebildet ist, ist die Beweglichkeit und Verdrehbarkeit des Zahnringes verbessert, so dass eine elastische Verspannung realisierbar ist, bei der die Verzahnungen bzw. die Zähne des Wellenelements, des Nabenelements und des Zahnringes in einer Relativverdrehrichtung zueinander verspannt werden können. Beim Auftreten von Drehmomentbeanspruchungen in Folge von Torsionsschwingungen in eine der Relativdrehrichtungen erfolgt eine Schwingungsfiltrierung bzw. Dämpfung mittels des die elastische Verspannung bewirkenden Zahnringes.

Weiter bevorzugt ist es vorgesehen, dass der Zahnring aus einem Federblech ausgebildet ist. Das Federblech weist eine hohe Elastizität auf, wodurch eine optimale Verspannung realisiert werden kann. Ferner weist das Federblech vorzugsweise eine sehr geringe Dicke und ein sehr geringes Gewicht auf. Zudem benötigt das Federblech lediglich einen sehr geringen Bauraum, so dass der Zahnring Platz sparend in die Welle-Nabe-Verbindung eingebracht werden kann und trotzdem eine sichere Verspannung realisierbar ist.

Nach einer weiter bevorzugten Ausgestaltung der Erfindung ist der Zahnring an dem Nabenelement oder an dem Wellenelement befestigbar. Ist der Zahnring an dem Nabenelement befestigbar, so weist der Zahnring vorzugsweise eine Innenverzahnung auf, welche mit einem Winkel versetzt zu der Innenverzahnung des Nabenelements ausgebildet ist. Zur Montage der Welle-Nabe-Verbindung wird dann vorzugsweise zuerst der Zahnring an dem Nabenelement befestigt und anschließend wird das Wellenelement mit seiner Außenverzahnung in dem Spalt zwischen der Innenverzahnung des Zahnringes und der Innenverzahnung des Nabenelements eingeschoben, in dem durch Aufbringung einer Kraft auf das Wellenelement das Wellenelement den Zahnring entlang seiner Rotationsachse axial bewegt und dadurch eine Verdrehung des Zahnringes um seine Rotationsachse erfolgt, bis die Außenverzahnung des Wellenelements in den Spalt zwischen der Innenverzahnung des Nabenelements und der Innenverzahnung des Zahnringes eingepasst werden kann. Zum besseren Einfügen der Außenverzahnung des Wellenelements in den Spalt weisen die Zähne der Außenverzahnung des Wellenelements an ihrer Stirnseite vorzugsweise eine angeschrägte Fase auf. Ist der Zahnring hingegen an dem Wellenelement befestigbar, so weist der Zahnring vorzugsweise eine Außenverzahnung auf, welche mit einem Winkel versetzt zu der Außenverzahnung des Wellenelements ausgebildet ist. Zur Montage der Welle-Nabe-Verbindung wird dann vorzugsweise zuerst der Zahnring an dem Wellenelement befestigt und anschließend wird das Nabenelement mit seiner Innenverzahnung in den Spalt zwischen der Außenverzahnung des Zahnringes und der Außenverzahnung des Wellenelements eingeschoben, in dem durch Aufbringung einer Kraft auf das Nabenelement das Nabenelement den Zahnring entlang seiner Rotationsachse axial bewegt und dadurch eine Verdrehung des Zahnringes um seine Rotationsachse erfolgt bis die Innenverzahnung des Nabenelements in den Spalt zwischen der Außenverzahnung des Wellenelements und der Außenverzahnung des Zahnringes eingespannt werden kann. Zum besseren Einfügen des Nabenelements in den Spalt weisen die Zähne der Innenverzahnung des Nabenelements an ihrer Stirnseite vorzugsweise eine angeschrägte Fase auf.

Der Zahnring weist mindestens zwei Stegelemente auf, mittels welcher der Zahnring an dem Nabenelement oder dem Wellenelement befestigt ist. Die Stegelemente sind dabei vorzugsweise an der Seitenfläche des Zahnrings ausgebildet, welche vorzugsweise der mit der Verzahnung versehenden Seitenfläche gegenüberliegt, wobei die Stegelemente vorzugsweise armförmig entsprechend der Umfangsflächenform des Zahnringes von der Außenumfangsfläche oder der Innenumfangsfläche des Zahnrings weg führend mit einem bestimmten Abstand ausgebildet sein können. Durch die Stegelemente ist es möglich, dass der Zahnring mit einem bestimmten Abstand zu der Innenverzahnung des Nabenelements oder der Außenverzahnung des Wellenelements befestigt werden kann, so dass der Zahnring eine größtmögliche Flexibilität in seiner Bewegung bei der Montage der Welle-Nabe-Verbindung aufweisen kann, so dass ein optimales elastisches Verspannen möglich ist.

Die Stegelemente sind dabei vorzugsweise elastisch ausgebildet. Durch die Elastizität der Stegelemente kann der Zahnring möglichst elastisch axial bewegt und verdreht werden, so dass die Verzahnung des Zahnrings relativ zu der Innenverzahnung des Nabenelements und der Außenverzahnung des Wellenelements axial bewegt und verdreht werden kann. Durch die dabei entstehende Torsion des Zahnringes, die durch die Verdrehung des Winkelversatzes von der Innenverzahnung des Nabenelements und/oder der Außenverzahnung des Wellenelements zur Verzahnung des Zahnrings entsteht, kann ein Verspannmoment erzeugt werden, welches das Spiel der Welle-Nabe-Verbindung bzw. der Welle-Nabe-Verzahnung eliminiert bzw. in einem gewissen Bereich eliminieren kann. Das erzeugte Vorspannmoment bzw. Verspannmoment kann nach Ermittlung des erforderlichen Winkelversatzes zwischen dem Nabenelement und/oder dem Wellenelement und dem Zahnring durch Toleranzberechnungen, beispielsweise mittels der Finite-Elemente-Methode, ermittelt und in Versuchen verifiziert werden. Durch eine entsprechende Anpassung der Elastizität oder der Bauform der Stegelemente kann das Vorspannmoment bzw. das Verspannmoment erhöht bzw. reduziert werden. Dadurch ist es möglich, ein besonders optimales Verspannen einer Welle-Nabe-Verbindung realisieren zu können.

Ferner ist es vorgesehen, dass die Stegelemente blattfederartig ausgebildet sind. Die blattfederartigen Stegelemente sind vorzugsweise aus einem flachen Metallband gebildet, welche einstückig mit dem Zahnring verbunden sind, wobei das Metallband bogenförmig vorgespannt sein kann. Die Stegelemente sind dabei vorzugsweise bogenförmig entlang zumindest eines Teilbereichs der Außenumfangsfläche bzw. entlang zumindest eines Teilbereichs der Innenumfangsfläche des Zahnrings ausgebildet. Die Länge der blattfederartigen Stegelemente ist dabei vorzugsweise konstant, was bedeutet, dass die Länge der blattfederartigen Stegelemente durch Zug- oder Druckbeanspruchung nicht veränderbar ist. Durch die konstante Länge der blattfederartigen Stegelemente kann eine Drehung des Zahnringes bei einer axialen Bewegung des Zahnringes entlang seiner Rotationsachse realisiert werden.

Die Stegelemente sind nach einer bevorzugten Ausgestaltung der Erfindung mittels einer Nietverbindung mit dem Nabenelement oder dem Wellenelement verbunden. Dafür weisen die Stegelemente vorzugsweise an ihrem einen Ende, welches dem Ende, an welchem das Stegelement an dem Zahnring selber angebunden ist, gegenüberliegt, eine Bohrung auf, in welche die Nietverbindung einbringbar ist. Durch die Nietverbindungen ist eine möglichst einfache Befestigung des Zahnringes an dem Nabenelement oder dem Wellenelement möglich. Dadurch, dass die Befestigung des Zahnringes an den Stegelementen und nicht im Bereich der Verzahnung des Zahnrings erfolgt, ist eine optimale Bewegungsfreiheit des Zahnringes zur Ausführung einer axialen Bewegung und einer Drehbewegung zum Verspannen des Wellenelements mit dem Nabenelement realisierbar. Die Verzahnung des Zahnringes ist dabei vorzugsweise gerichtet geräumt, das heißt, dass die Lage der Zähne der Verzahnung zu den für die Befestigung notwendigen Bohrungen zu dem Nabenelement oder zu dem Wellenelement, in Abhängigkeit, ob der Zahnring an dem Nabenelement oder dem Wellenelement befestigt ist, definiert sind. Ferner ist es ebenfalls vorzugsweise vorgesehen, dass, wenn der Zahnring an dem Nabenelement befestigt ist, die Innenverzahnung des Nabenelements gerichtet geräumt ist, das heißt, dass die Lage der Zähne des Nabenelements zu den für die Befestigung notwendigen Bohrungen zu dem Zahnring definiert sind. Ist der Zahnring an dem Wellenelement befestigt, ist es vorzugsweise vorgesehen, dass die Außenverzahnung des Wellenelements gerichtet geräumt ist, das heißt, dass die Lage der Zähne des Wellenelements zu den für die Befestigung notwendigen Bohrungen zu dem Zahnring definiert sind. Anstelle der Nietverbindung kann auch eine andere formschlüssige Verbindung, wie beispielsweise eine Schraubenverbindung, vorgesehen sein.

Die Erfindung betrifft ferner ein Drehmomentübertragungssystem, umfassend ein Massenschwungrad und eine Doppelkupplung, wobei das Massenschwungrad und die Doppelkupplung über ein wie vorstehend aus- und weitergebildetes Verspannsystem miteinander verbunden sind.

Das Wellenelement des Verspannsystems bildet dabei einen sekundärseitigen Abtrieb der Doppelkupplung, wobei das Nabenelement des Verspannsystems eine sekundärseitige Antriebsnabe des Massenschwungrades bildet, wobei das Massenschwungrad einteilig oder mehrteilig ausgebildet sein kann. Bei den aus dem Stand der Technik bekannten Drehmomentübertragungssystemen erfolgt die Verbindung zwischen dem Massenschwungrad und der Doppelkupplung über eine nicht tangential vorgespannte Welle-Nabe-Verbindung. Durch das dabei entstehende Spiel in der nicht tangential vorgespannten Welle-Nabe-Verbindung werden im Leerlauf Geräusche verursacht, die, bedingt durch die Drehungleichförmigkeit des Verbrennungsmotors, durch das Auftreffen der Innenverzahnung des Nabenelements und der Außenverzahnung des Wellenelements verursacht werden. Durch die Verwendung eines erfindungsgemäßen Verspannsystems in einem derartigen Kupplungssystem, können diese Nachteile vermieden werden. Durch das erfindungsgemäße Verspannsystem kann bei einer derartigen Welle-Nabe-Verbindung ein Verspannmoment aufgebracht werden, um das Spiel in der Welle-Nabe-Spiel bis zu einem gewissen Moment eliminieren zu können.

Ferner kann das Kupplungssystem in Form einer Doppelkupplung ausgebildet sein mit beispielsweise einem zwischen einem Bogenfederflansch vorgesehenen Mitnehmerring, welches eine erfindungsgemäßes Verspannsystem zur Drehmomentübertragung und axialem Toleranzausgleich aufweist.

Bezüglich der weiteren Vorteile des Kupplungssystems kann auf die oben aufgeführten Vorteile des erfindungsgemäßen Verspannsystems verwiesen werden.

Ferner erfolgt die Lösung der eingangs genannten Aufgabe erfindungsgemäß durch das Verfahren gemäß Anspruch 7.

Der Zahnring wird in einem ersten Schritt zunächst an dem Nabenelement oder an dem Wellenelement angeordnet, wobei die Verzahnung des Zahnringes dabei bereits versetzt zu der Innenverzahnung des Nabenelements bzw. der Außenverzahnung des Wellenelement angeordnet ist. Wird der Zahnring zunächst an dem Nabenelement befestigt, so wird in einem zweiten Schritt das Wellenelement mit seiner Außenverzahnung zwischen die jeweils zwischen den Zähnen der Innenverzahnung des Zahnringes und der Innenverzahnung des Nabenelements bestehenden Spalte eingefügt, indem der Zahnring eine axiale Bewegung entlang seiner Rotationsachse ausführt und sich dabei relativ zu dem Nabenelement verdreht. Die Verdrehung des Zahnringes erfolgt dabei soweit bis die Zähne der Außenverzahnung des Wellenelements jeweils in den Spalt zwischen der Innenverzahnung des Nabenelements und der Innenverzahnung des Zahnringes eingespannt werden können. Wird der Zahnring in dem ersten Schritt hingegen zunächst an dem Wellenelement angeordnet, so besteht ein Winkelversatz zwischen der Außenverzahnung des Zahnringes und der Außenverzahnung des Wellenelements. In dem zweiten Schritt wird dann vorzugsweise das Nabenelement an dem Wellenelement befestigt, indem die Zähne der Innenverzahnung des Nabenelements jeweils in den Spalt zwischen der Außenverzahnung des Wellenelements und der Außenverzahnung des Zahnrings eingreifen, indem der Zahnring durch eine axiale Bewegung zu seiner Rotationsachse relativ zum Wellenelement verdreht wird.

Beim Verbinden des Wellenelements mit dem Nabenelement wird der Zahnring axial entlang seiner Rotationsachse bewegt, wobei durch die axiale Bewegung der Zahnring tangential zu seiner Rotationsachse verdreht wird. Durch das tangentiale Verdrehen des Zahnrings zu seiner Rotationsachse kann das Nabenelement bzw. das Wellenelement mit seiner jeweiligen Verzahnung leicht in den Spalt zwischen der Verzahnung des Zahnringes und der Außenverzahnung des Wellenelements bzw. in den Spalt zwischen der Verzahnung des Zahnrings und der Innenverzahnung des Nabenelements eingefügt werden, so dass die Montage relativ einfach und schnell erfolgen kann.

Nachfolgend wird die Erfindung unter Bezugnahme auf die anliegenden Zeichnungen anhand bevorzugter Ausführungsbeispiele näher erläutert.

Es zeigen:
- Fig. 1: eine schematische Darstellung eines erfindungsgemäßen Zahnringes nach einer ersten Ausführungsform;
- Fig. 2: eine schematische Darstellung eines Nabenelements mit dem in Fig. 1 gezeigten Zahnring;
- Fig. 3: eine schematische Darstellung eines weiteren Nabenelements mit dem in Fig. 1 gezeigten Zahnrings und einem montierten Wellenelement;
- Fig. 4: eine schematische Darstellung eines vergrößerten Ausschnitts der in Fig. 3 dargestellten Verbindung des Zahnringes, des Wellenelements und des Nabenelements;
- Fig. 5: eine schematische Darstellung eines Zahnringes nach einer zweiten Ausführungsform angeordnet an einem Nabenelement;
- Fig. 6: eine schematische Darstellung eines vergrößerten Ausschnittes der in Fig. 5 gezeigten Darstellung;
- Fig. 7: eine schematische Darstellung einer Welle-Nabe-Verbindung mit dem in Fig. 5 gezeigten Zahnring und dem Nabenelement in einem verspannten Zustand; und
- Fig. 8: eine schematische Darstellung eines vergrößerten Ausschnittes der in Fig. 7 gezeigten Welle-Nabe-Verbindung.

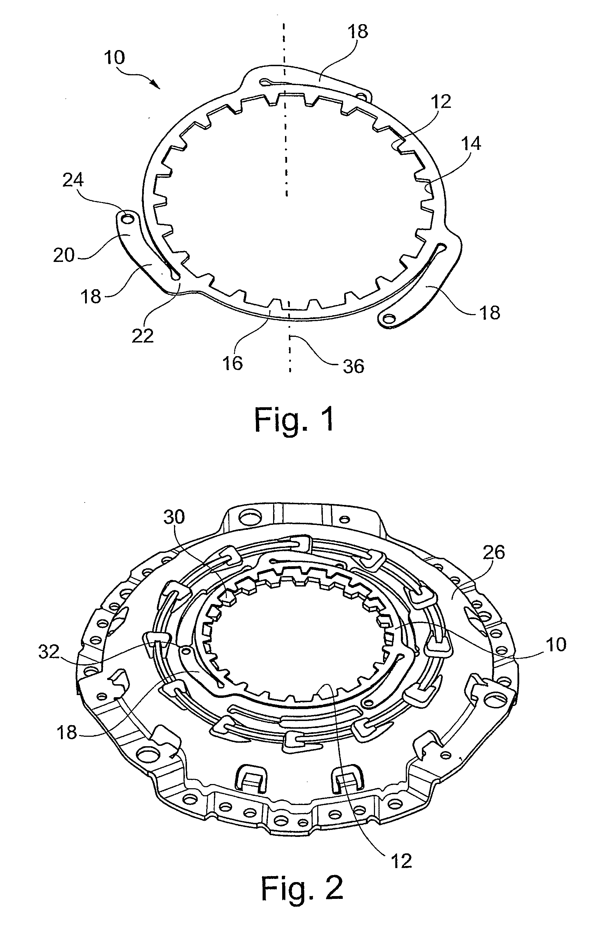

Fig. 1 zeigt einen erfindungsgemäßen Zahnring 10 gemäß einer ersten Ausführungsform, welcher zum Verspannen einer Welle-Nabe-Verbindung verwendet werden kann. Der Zahnring 10 weist eine Innenverzahnung 12 an seiner Innenumfangsfläche 14 auf. An seiner Außenumfangsfläche 16 weist der Zahnring 10 Stegelemente 18 auf, welche blattfederartig ausgebildet sind. Der hier gezeigte Zahnring 10 weist drei blattfederartige Stegelemente 18 auf, wobei es ebenfalls vorgesehen sein kann, dass zwei oder mehr als drei blattfederartige Stegelemente 18 an dem Zahnring 10 angeordnet sein können. An einem ersten Ende 20 der Stegelemente 18, welches einem zweiten Ende 22 der Stegelemente 18, welche unmittelbar an dem Zahnring 10 angebunden sind, gegenüberliegt, ist jeweils eine Bohrung 24 vorgesehen, über welche der Zahnring 10 mit einem Nabenelement 26 oder einem Wellenelement 28 verbunden werden kann, beispielsweise mittels einer Nietverbindung 32, wie in Fig. 2 gezeigt. Die blattfederartigen Stegelemente 18 sind vorzugsweise bogenförmig ausgebildet, so dass sie entlang zumindest eines Teilbereichs der Außenumfangsfläche 16 des Zahnringes 10 verlaufen. Der Zahnring 10 und insbesondere die Stegelemente 18 des Zahnringes 10 weisen eine hohe Elastizität, insbesondere entlang ihrer Längsachse, auf, wobei die Länge der Stegelemente 18 bei der axialen Bewegung und der Verdrehung des Zahnringes 10 vorzugsweise konstant bleibt. Der Zahnring 10 ist vorzugsweise aus einem dünnen Blech mit einer sehr geringen Dicke, vorzugsweise in Form eines Federblechs, ausgebildet.

Fig. 2 zeigt einen in Fig. 1 dargestellten Zahnring 10, welcher an einem Nabenelement 26 befestigt ist. Das Nabenelement 26 bildet vorzugsweise eine sekundärseitige Antriebsnabe eines Zweimassenschwungrades, wobei das Nabenelement 26 in Fig. 2 in Form eines Deckels ausgebildet ist. Wie in Fig. 2 ersichtlich, ist die Innenverzahnung 12 des Zahnringes 10 mit einem Winkel versetzt zu der Innenverzahnung 30 des Nabenelements 26 angeordnet. Ferner weisen die Zähne 12 des Zahnringes vorzugsweise eine geringere Breite auf als die Zähne 30 des Nabenelements 26. Befestigt ist der Zahnring 10 an dem Nabenelement 26 mittels Nieten 32, welche in den Bohrungen 24 des Zahnrings 10 und in an dem Nabenelement 26 vorgesehenen Bohrungen angeordnet sind.

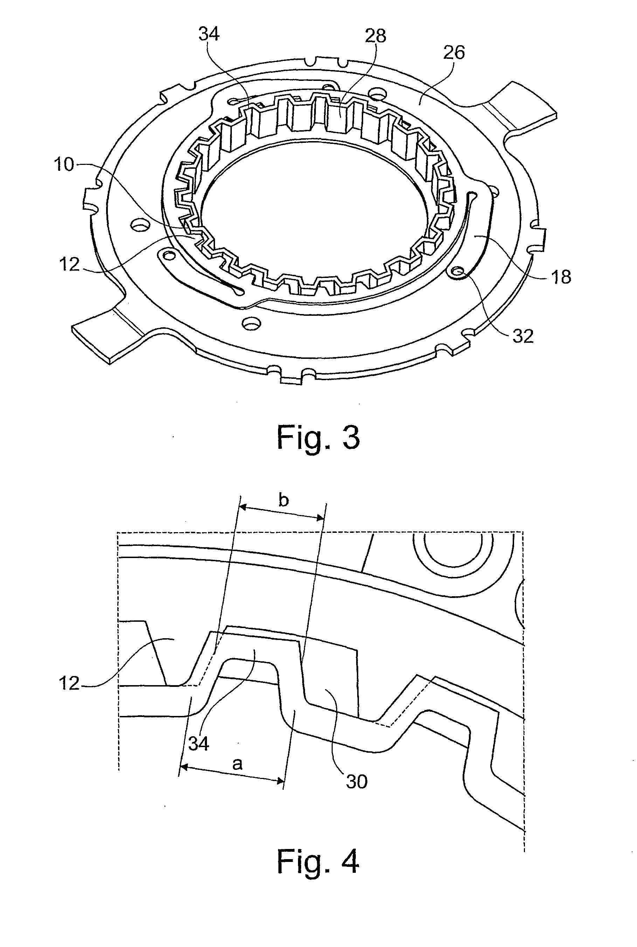

In Fig. 3 ist eine Welle-Nabe-Verbindung in einem verspannten Zustand gezeigt, wobei ein eine Außenverzahnung 34 aufweisendes Wellenelement 28 zwischen einem Spalt der Innenverzahnung 12 des Zahnrings 10 und der Innenverzahnung 30 des Nabenelements 26 eingreift und darin befestigt ist und somit eine Verspannung bzw. eine Vorspannung der Welle-Nabe-Verbindung realisiert wird. Das Wellenelement 28 ist hier in Form eines Mitnehmerringes ausgebildet, wobei der Mitnehmerring bzw. das Wellenelement 28 vorzugsweise einen sekundärseitigen Abtrieb einer Doppelkupplung bildet. Die Zähne der Außenverzahnung 34 des Wellenelements 28 weisen an ihrer Stirnseite eine angeschrägte Fase auf, welche die Befestigung der Zähne der Außenverzahnung 34 des Wellenelements 28 in dem Spalt zwischen den Zähnen der Verzahnung 12 des Zahnrings 10 und der Zähne der Innenverzahnung 30 des Nabenelements 26 erleichtert.

Fig. 4 zeigt eine vergrößerte Darstellung der Welle-Nabe-Verbindung aus Fig. 3, wobei hierbei die Zahnbreite a des Wellenelements 28 im Verhältnis zum Spalt b zwischen einem Zahn der Verzahnung 12 des Zahnrings 10 und einem Zahn der Verzahnung 30 des Nabenelements 26 gezeigt ist. Bevor der verspannte Zustand erreicht wird, weist der Spalt b eine wesentlich geringere Breite auf als die Zahnbreite a des Wellenelements 28. Erst durch eine axiale Bewegung des Zahnrings 10 entlang seiner Rotationsachse 36 und die dadurch hervorgerufene Verdrehung des Zahnrings 10 tangential zu seiner Rotationsachse 36 wird der Spalt b zwischen dem Zahn der Verzahnung 12 des Zahnrings 10 und dem Zahn der Innenverzahnung 30 des Nabenelements 26 derart vergrößert, dass der Spalt b im Wesentlichen die gleiche Breite aufweist wie die Zahnbreite a des Wellenelements 28. Der Zahn der Außenverzahnung 34 des Wellenelements 28 wird somit zwischen einem Zahn der Verzahnung 12 des Zahnrings 10 und einem Zahn der Innenverzahnung 30 des Nabenelements 26 festgeklemmt.

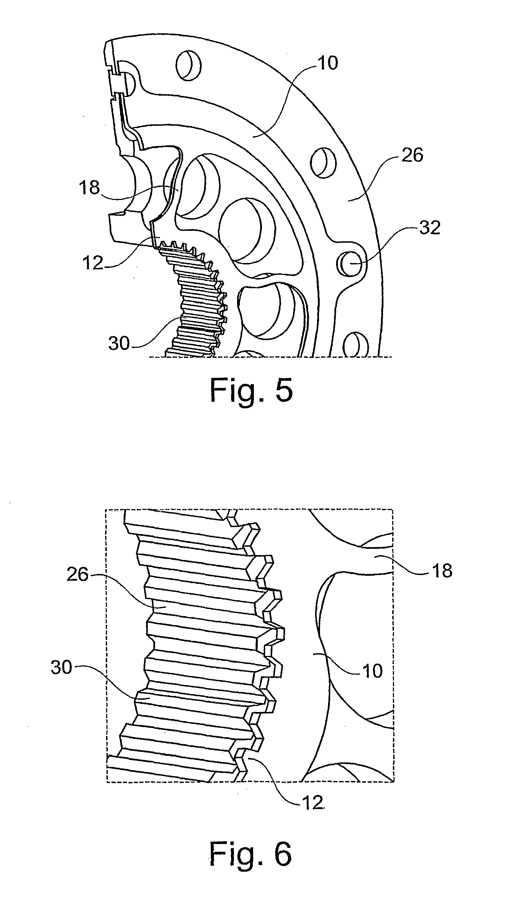

In den Fig. 5 bis 8 wird eine Welle-Nabe-Verbindung gemäß einer zweiten Ausführungsform gezeigt.

Fig. 5 zeigt ein Nabenelement 26, an welchem ein als Federblech ausgebildeter Zahnring 10 über eine Nietverbindung 32 befestigt ist. Der Zahnring 10 weist an seiner Innenumfangsfläche 14 eine Innenverzahnung 12 auf und entlang seiner Außenumfangsfläche 16 sind elastische Stegelemente 18 ausgebildet, welche sich radial von der Außenumfangsfläche 16 weg erstrecken.

Fig. 6 zeigt einen vergrößerten Ausschnitt des in Fig. 5 gezeigten Zahnrings 10 und des Nabenelements 26, wobei hierbei der Versatz zwischen der Innenverzahnung 12 des Zahnrings 10 und der Innenverzahnung 30 des Nabenelements 26 erkennbar ist.

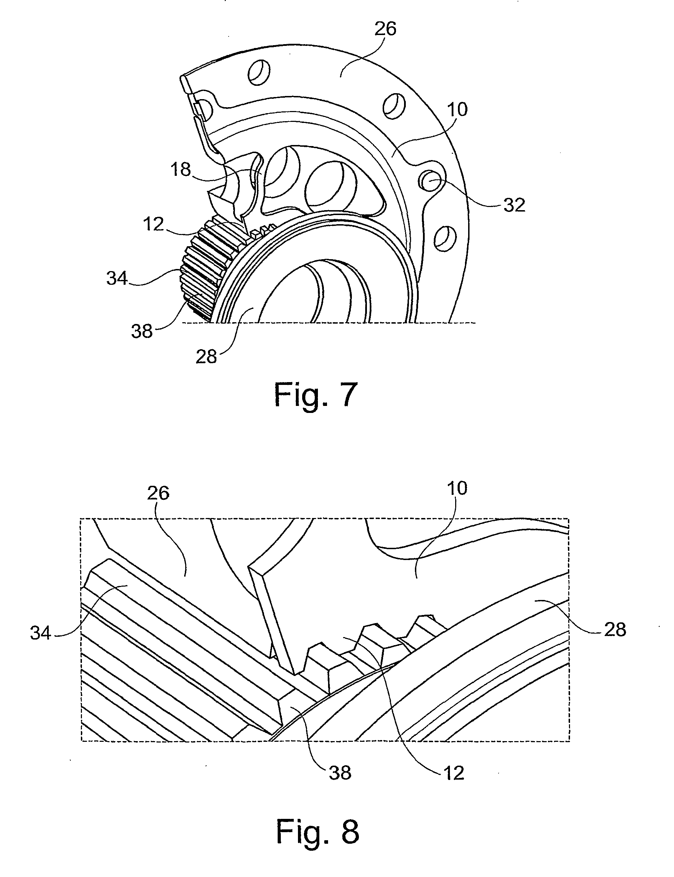

Fig. 7 zeigt die Welle-Nabe-Verbindung in einem verspannten Zustand, wobei die Außenverzahnung 34 des Wellenelements 28 in einen Spalt zwischen der Innenverzahnung 12 des Zahnrings 10 und der Innenverzahnung 30 des Nabenelements 26 eingreift, was insbesondere in Fig. 8, welche eine vergrößerte Darstellung der in Fig. 7 gezeigten Verbindung darstellt, gezeigt ist.

In Fig. 8 ist deutlich zu erkennen, dass die Zähne der Außenverzahnung 34 des Wellenelements 28 an ihrer Stirnseite 38 eine angeschrägt ausgebildet Fase zum leichteren Einfädeln der Zähne der Außenverzahnung 34 des Wellenelements 28 in den Spalt zwischen den Zähnen der Verzahnung 12 des Zahnrings 10 und den Zähnen der Innenverzahnung 30 des Nabenelements 26 aufweisen.

Das in den Fig. 1 bis 4 gezeigte Verspannsystem ist vorzugsweise in Doppelkupplungen einsetzbar. Das in den Fig. 5 bis 8 gezeigte Verspannsystem wird vorzugsweise in Dämpfersystemen eingesetzt.

Mit dem erfindungsgemäßen Verspannsystem ist es insbesondere möglich, Geräusche im Fahrzeug, die durch das Spiel in der Welle-Nabe-Verbindung zwischen Doppelkupplungsdämpfer und Doppelkupplungsgetriebe entstehen, insbesondere in Form von Verzahnungsklackern, zu eliminieren.

### Bezugszeichenliste

- 10: Zahnring
- 12: Verzahnung
- 14: Innenumfangsfläche
- 16: Außenumfangsfläche
- 18: Stegelement
- 20: erstes Ende
- 22: zweites Ende
- 24: Bohrung
- 26: Nabenelement
- 28: Wellenelement
- 30: Verzahnung
- 32: Nietverbindung
- 34: Verzahnung
- 36: Rotationsachse
- 38: Fase

## Patentansprüche

1. Verspannsystem für eine Welle-Nabe-Verbindung, mit einem eine Außenverzahnung (34) aufweisenden Wellenelement (28), einem eine Innenverzahnung (30) aufweisenden Nabenelement (26), und einem eine Verzahnung (12) aufweisenden Zahnring (10) zum Verspannen des Wellenelements (28) mit dem Nabenelement (26), wobei in einem verspannten Zustand die Verzahnung (12) des Zahnrings (10) mit einem Winkel versetzt zur Innenverzahnung (30) des Nabenelements (26) und/oder zur Außenverzahnung (34) des Wellenelements (28) angeordnet ist, **dadurch gekennzeichnet, dass** der Zahnring (10) mindestens zwei blattfederartig ausgebildete Stegelemente (18) aufweist, mittels derer der Zahnring (10) an dem Nabenelement (26) oder dem Wellenelement (28) befestigbar ist, und mittels derer der Zahnring (10) zum Erreichen des verspannten Zustands eine axiale Bewegung und eine Verdrehung erfährt.

2. Verspannsystem nach Anspruch 1, **dadurch gekennzeichnet, dass** der Zahnring (10) elastisch ausgebildet ist.

3. Verspannsystem nach Anspruch 1 oder 2, **dadurch gekennzeichnet, dass** der Zahnring (10) aus einem Federblech ausgebildet ist.

4. Verspannsystem nach einem der Ansprüche 1 bis 3, **dadurch gekennzeichnet, dass** die Stegelemente (18) elastisch ausgebildet sind.

5. Verspannsystem nach einem der Ansprüche 1 bis 4, **dadurch gekennzeichnet, dass** die Stegelemente (18) mittels einer Nietverbindung (32) mit dem Nabenelement (26) oder dem Wellenelement (28) verbindbar sind.

6. Drehmomentübertragungssystem, umfassend ein Massenschwungrad und eine Doppelkupplung, wobei das Massenschwungrad und die Doppelkupplung über ein Verspannsystem nach einem der Ansprüche 1 bis 5 miteinander verbunden sind.

7. Verfahren zum Verspannen einer Welle-Nabe-Verbindung, bei dem ein eine Außenverzahnung (34) aufweisendes Wellenelement (28) mit einem eine Innenverzahnung (30) aufweisendem Nabenelement (26) verbunden wird, indem ein eine Verzahnung (12) aufweisender Zahnring (10) an der Welle-Nabe-Verbindung angeordnet wird, wobei die Verzahnung (10) des Zahnrings (10) mit einem Winkel versetzt zu der Innenverzahnung (30) des Nabenelements (26) und/oder zu der Außenverzahnung (34) des Wellenelements (28) angeordnet wird, **dadurch gekennzeichnet, dass** beim Verbinden des Wellenelements (28) mit dem Nabenelement (26) der Zahnring (10) axial entlang seiner Rotationsachse (36) bewegt wird, wobei der Zahnring (10) mittels mindestens zweier blattfederartig ausgebildeter Stegelemente (18) während der axialen Bewegung tangential zu seiner Rotationsachse (36) verdreht wird.

## Claims

1. Clamping system for a shaft/hub connection having a shaft element (28) which has an external toothing system (34), a hub element (26) which has an internal toothing system (30), and a toothed ring (10) which has a toothing system (12) for clamping the shaft element (28) to the hub element (26), the toothing system (12) of the toothed ring (10) being arranged, in a clamped state, offset at an angle with respect to the internal toothing system (30) of the hub element (26) and/or with respect to the external toothing system (34) of the shaft element (28), **characterized in that** the toothed ring (10) has at least two web elements (18) which are formed in a leaf-spring-like manner, by means of which the toothed ring (10) can be fastened to the hub element (26) or the shaft element (28), and by means of which the toothed ring (10) experiences an axial movement and a rotation in order to reach the clamped state.

2. Clamping system according to Claim 1, **characterized in that** the toothed ring (10) is of elastic configuration.

3. Clamping system according to Claim 1 or 2, **characterized in that** the toothed ring (10) is configured from a spring plate.

4. Clamping system according to one of Claims 1 to 3, **characterized in that** the web elements (18) are of elastic configuration.

5. Clamping system according to one of Claims 1 to 4, **characterized in that** the web elements (18) can be connected to the hub element (26) or the shaft element (28) by means of a riveted connection (32).

6. Torque transmission system, comprising a flywheel and a double clutch, the flywheel and the double clutch being connected to one another via a clamping system according to one of Claims 1 to 5.

7. Method for clamping a shaft/hub connection, in which method a shaft element (28) which has an external toothing system (34) is connected to a hub element (26) which has an internal toothing system (30), by a toothed ring (10) which has a toothing system (12) being arranged on the shaft/hub connection, the toothing system (12) of the toothed ring (10) being arranged offset at an angle with respect to the internal toothing system (30) of the hub element (26) and/or with respect to the external toothing system (34) of the shaft element (28), **characterized in that**, during the connection of the shaft element (28) to the hub element (26), the toothed ring (10) is moved axially along its rotational axis (36), the toothed ring (10) being rotated during the axial movement tangentially with respect to its rotational axis (36) by means of at least two web elements (18) which are formed in a leaf-spring-like manner.

## Revendications

1. Système de serrage pour une liaison arbre-moyeu, comportant un élément d'arbre (28) comprenant une denture extérieure (34), un élément de moyeu (26) comprenant une denture intérieure (30) et un anneau denté (10) comprenant une denture (12) pour serrer l'élément d'arbre (28) sur l'élément de moyeu (26), la denture (12) de l'anneau denté (10) étant, dans un état serré, disposée de manière décalée suivant un angle par rapport à la denture intérieure (30) de l'élément de moyeu (26) et/ou par rapport à la denture extérieure (34) de l'élément d'arbre (28), **caractérisé en ce que** l'anneau denté (10) comprend au moins deux éléments d'ailette (18) réalisés sous forme de ressorts à lame, au moyen desquels l'anneau denté (10) peut être fixé à l'élément de moyeu (26) ou à l'élément d'arbre (28), et au moyen desquels l'anneau denté (10) subit un déplacement axial et une rotation pour atteindre l'état serré.

2. Système de serrage selon la revendication 1, **caractérisé en ce que** l'anneau denté (10) est réalisé de manière élastique.

3. Système de serrage selon la revendication 1 ou 2, **caractérisé en ce que** l'anneau denté (10) est réalisé à partir d'une tôle élastique.

4. Système de serrage selon l'une quelconque des revendications 1 à 3, **caractérisé en ce que** les éléments d'ailette (18) sont réalisés de manière élastique.

5. Système de serrage selon l'une quelconque des revendications 1 à 4, **caractérisé en ce que** les éléments d'ailette (18) peuvent être reliés à l'élément de moyeu (26) ou à l'élément d'arbre (28) au moyen d'une liaison par rivetage (32).

6. Système de transmission de couple, comportant un volant d'inertie et un embrayage double, le volant d'inertie et l'embrayage double étant reliés l'un à l'autre par le biais d'un système de serrage selon l'une quelconque des revendications 1 à 5.

7. Procédé pour serrer une liaison arbre-moyeu, dans lequel un élément d'arbre (28) comprenant une denture extérieure (34) est relié à un élément de moyeu (26) comprenant une denture intérieure (30), en ce qu'un anneau denté (10) comprenant une denture (12) est disposé sur la liaison arbre-moyeu, la denture (12) de l'anneau denté (10) étant disposée de manière décalée suivant un angle par rapport à la denture intérieure (30) de l'élément de moyeu (26) et/ou par rapport à la denture extérieure (34) de l'élément d'arbre (28), **caractérisé en ce que**, lors de la liaison de l'élément d'arbre (28) à l'élément de moyeu (26), l'anneau denté (10) est déplacé axialement le long de son axe de rotation (36), l'anneau denté (10) étant tourné tangentiellement à son axe de rotation (36) pendant le déplacement axial au moyen d'au moins deux éléments d'ailette (18) réalisés sous forme de ressorts à lame.
